# EUROPÄISCHE PATENTSCHRIFT

(11) **EP 0 438 802 B1**
(45) Veröffentlichungstag und Bekanntmachung des Hinweises auf die Patenterteilung: **26.01.1994**
(21) Anmeldenummer: 90125698.2
(22) Anmeldetag: 28.12.1990
(51) Int. Cl.: A61C 13/20

(54) **Verfahren zum Steuern eines Ofens**
Method of controlling a kiln
Procédé de contrôle d'un four

(30) Priorität: 26.01.1990 DE 4002358
(43) Veröffentlichungstag der Anmeldung: 31.07.1991
(73) Patentinhaber: IVOCLAR AG, FL-9494 Schaan (LI)
(72) Erfinder: Rheinberger, Volker, FL-9490 Vaduz (LI); Beham, Gerhard, FL-9494 Schaan (LI); Moldaschl, Viktor, CH-9472 Grabs (CH)
(74) Vertreter: Baronetzky, Klaus, Dipl.-Ing.

(56) Entgegenhaltungen:
- EP-A- 0 231 773
- DE-A- 2 264 247
- DE-A- 3 831 539
- PATENT ABSTRACTS OF JAPAN, Band 13, Nr. 318 (M-852)[3666], 19. Juli 1989;& JP-A-1 104 500 (HITACHI METALS LTD) 21-04-1989

## Beschreibung

Die Erfindung betrifft ein Verfahren gemäß dem Oberbegriff von Anspruch 1, sowie einen Ofen gemäß dem Oberbegriff von Anspruch 11.

Derartige Verfahren bzw. Öfen zum Herstellen von Zahnersatzteilen sind aus der DE-PS 26 32 846 und der EP-A1-231 773 bekannt. Hierbei werden Zahnersatzteile in einem Brennofen hergestellt, in welchem die gewünschte Zahnersatzmasse, beispielsweise eine Dentalkeramik, in einem Formeinsatz gebrannt wird.

Zur Erzeugung des Formeinsatzes wird zunächst ein Wachsmodell erstellt. In einer auch aus der DE-PS 664 133 bzw. der AT-PS 157 210 bekannten Weise wird ein temperaturbeständiger Formeinsatz erstellt, wobei oberhalb des Wachskörpers - sei es ebenfalls durch einen Wachskörper, sei es durch nachträgliche Anfertigung - ein Gußkanal freigelassen wird. Nach Aushärtung der den Formeinsatz bildenden und beispielsweise in einer Muffel aufgenommenen Masse wird das Wachs durch Erwärmung entfernt, so daß ein Formraum verbleibt. An diesen schließt sich der Gußkanal an, der bei dem genannten Stand der Technik als Vorpreßraum dient.

In diesen Vorpreßraum wird dann die als Dentalkeramik dienende Masse z.B. in Form eines Rohlings eingesetzt und durch Erwärmung zur Erweichung gebracht, so daß sie in den Formraum gelangt und dort die Form des gewünschten Zahnersatzteils annimmt.

Zur Vermeidung gefährlicher Lufteinschlüsse, aber auch, um ein Schrumpfen der Masse zu verhindern, hat man bereits frühzeitig die Masse unter Druck gesetzt und hierzu, wie es beispielsweise aus der AT-PS 157 210 zu ersehen ist, den Kolben gewichtsbelastet ausgeführt. An diesem Verfahren der Druckausübung hat sich im Grunde nichts geändert, obwohl auch die Druckbeaufschlagung mit einem pneumatischen Preßzylinder eingesetzt wurde, wie aus der EP-A1-231 773 ersichtlich ist.

Es besteht jedoch das Problem, daß Zahnersatzteile in den unterschiedlichsten Ausgestaltungen, Massen und Komplexitätsgraden hergestellt werden müssen, wobei aus Rationalitätsgründen stets der gleiche Ofen verwendet wird. Um den unterschiedlichen Erfordernissen Rechnung zu tragen, hat man daher auf Erfahrungswerten beruhende Programm erstellt, um einen geeigneten Abschaltzeitpunkt des Ofens festlegen zu können.

Die bislang bekannten Methode lassen jedoch gewisse Wünsche offen. So ist bei den bekannten Verfahren bzw. Öfen die Formtreue nicht immer gewährleistet, da die Heiz- bzw. Preßzeit im Grunde willkürlich festgelegt werden muß. Bei großem Fließwiderstand der Keramik, z.B. bei grazilen Kronen, kann es vorkommen, daß der Formraum noch gar nicht vollständig ausgefüllt ist, so daß die so hergestellte Krone unbrauchbar ist.

Zwar kann man, um das vollständige Ausfüllen sicherzustellen, den Abschaltzeitpunkt des Ofens später wählen. Hierdurch wird jedoch der Herstellungszyklus verlängert, was ebenfalls unerwünscht ist. Wird zudem die Heiz- und Preßzeit zu lange gewählt, so hat dies ein Überhitzen der Masse zur Folge, was ebenfalls Qualitätseinbußen mit sich bringt.

Andererseits ist die knappe Bemessung der Heiz- und Preßzeit problematisch, denn die Herstellung einer unbrauchbaren Krone kann erst nach Fertigstellung dieser festgestellt werden.

Auch kann es vorkommen, daß andere Qualitätsmerkmale des Zahnersatzteils Wünsche übriglassen; teilweise treten Luftblasen in den Keramikkronen auf, und manchmal ist die Druckfestigkeit des so fertiggestellten Zahnersatzteils unbefriedigend.

Daher ist es Aufgabe der Erfindung, ein Verfahren zum Steuern eines Ofens bzw. einen Ofen gemäß dem Oberbegriff von Anspruch 1 bzw. 11 zu schaffen, bei welchem die Herstellung zahntechnischer Massen auch im Zyklus beschleunigt ist, ohne daß die Qualität der verwendeten zahntechnischen Massen wie Dentalkeramiken leidet, auch wenn unterschiedliche Quantitäten gefertigt werden.

Diese Aufgabe wird erfindungsgemäß durch Anspruch 1 bzw. 11 gelöst. Vorteilhafte Weiterbildungen ergeben sich aus den Unteransprüchen.

Erfindungsgemäß besonders günstig ist es, daß sich der Ofen gefahrlos nach dem Brennzyklus öffnen läßt, indem man mit der überraschend einfachen Maßnahme, die Änderung der Kolbengeschwindigkeit festzustellen, zugleich anhand einer entsprechend ausgelegten Steuereinheit Rückschlüsse auf die Temperatur im Inneren der Muffel ziehen kann. Damit läßt sich auf eine sehr einfache Weise praktisch ein Temperatursensor ersetzen, der zudem stets separat angeschlossen werden müßte, um einen Austausch der Muffel samt Dentalkeramik zu erlauben.

Ferner läßt sich mit dem erfindungsgemäßen Verfahren das Befüllen des Formraums optimieren, und zwar unabhängig von der Gestaltung und Größe der Form und des entsprechenden Zahnersatzteils.

Überraschenderweise zeigt es sich, daß bei einer niedrigeren als der gewünschten Temperatur die Viskosität der Dentalkeramik erheblich höher war, und zwar unabhängig von der Form des Zahnersatzteils. Dies wird darauf zurückgeführt, daß der Rohling dann eine Art Pfropfen bildet, die dem Druck des Kolbens widersteht. Mit entsprechenden Regelmaßnahmen kann man nun beispielsweise den Druck noch weiter absenken, um nach Erhöhen der Temperatur einen gleichmäßigen Füllungsverlauf zu bewirken. Hiermit lassen sich in guter Qualität reproduzierbare Zahnersatzteile wie Kronen aus Dentalkeramiken, oder aus Metall-Legierungen, und sogar Kunststoff-Prothesen erzeugen, da auch bei diesen eine exakte Temperatursteuerung zu günstigen Ergebnissen führt.

Erfindungsgemäß ist es besonders günstig, daß aufgrund der Vergrößerung des Strömungswiderstands am Ende des Spritzvorgangs die Kolbengeschwindigkeit zunächst etwas sinkt - gleichen Preßdruck vorausgesetzt - dann aber stark abnimmt, sobald der Befüllungsgrad 100% beträgt, so daß die Strömung und damit die Absenkbewegung des Kolbens zum Erliegen kommt.

Unter Einbeziehung gegebenenfalls einer Nachpreßzeit kann nun der Ofen abgeschaltet werden, was aufgrund der vorhandenen Wärmekapazitäten zunächst zu noch keiner oder keiner nennenswerten Änderung der Temperatur innen in dem Formeinsatz führt.

Es ist besonders günstig, hierbei den Druck auf den Kolben noch aufrechtzuerhalten, so daß auch nach Abklingen der Strömung noch ein gewisses Nachverdichten während dieser Nachpreßzeit auftritt.

Die Nachpreßzeit erstreckt sich vom Feststellzeitpunkt, dem Ende der konstanten Kolbengeschwindigkeit, bis zum Abschaltzeitpunkt. Der Feststellzeitpunkt kann alternativ als Zeitpunkt definiert sein, bei welchem die Kolbengeschwindigkeit einen vorher festgelegten Wert unterschreitet, oder als Zeitpunkt, bei welchem die Kolbengeschwindigkeit zu Null wird.

Nach dem Ende der Nachpreßzeit, bei welchem der Druck abgeschaltet werden soll, kann die Führungsstange in die obere Position gebracht und die Muffel entnommen werden, so daß sogleich mit der Herstellung der nächsten Dentalkeramik begonnen werden kann.

Besonders vorteilhaft ist es aber, die Zeit zur Herstellung des Formlings inklusive der Nachpreßzeit zu berechnen. Bei bekannter Masse der herzustellenden Krone und des Rohlings kann die Absenkung des Kolbens als Maß für den Füllungsgrad des Formraums dienen. Durch die Verwendung einer geeigneten Steuereinheit können die so ermittelten Werte automatisch weiterverarbeitet und damit eine vollautomatische Steuerung durchgeführt werden.

Darüber hinaus ist auch eine Steuerung der Kolbengeschwindigkeit über eine Druckregelung möglich. Sollte nämlich die Kolbengeschwindigkeit bei einem vorgewählten Druck zu hoch werden, was die Gefahr von zu starken Turbulenzen und Blasenbildung heraufbeschwört, kann als sofort wirkende Maßnahme der Druck abgesenkt werden und zugleich die Heizleistung etwas vermindert werden. Das Vermindern der Heizleistung setzt die Kolbengeschwindigkeit ebenfalls herab, wobei die aufgrund der Wärmekapazitäten bestehende Totzeit einberechnet werden muß.

Besonders günstig ist es ferner, daß der maximale Füllungsgrad einfach dadurch erfaßt werden kann, daß festgestellt wird, wenn die Kolbengeschwindigkeit auf Null bzw. fast auf Null gesunken ist. Ferner ist es besonders günstig, daß die Füllungsmasse exakt berechnet werden kann, obwohl eine Füllung mit Standard-Rohlingen auch bei unterschiedlichen Volumina der Zahnersatzteile (Kronen, Prothesen od. dgl.) möglich ist.

Besonders günstig ist es, daß sich der Verformungswiderstand der Masse durch die Kolbengeschwindigkeit im Verhältnis zu der auf den Kolben wirkenden Kraft ohne weiteres ermitteln läßt. Wenn sehr unterschiedlich gestaltete Zahnersatzteile hergestellt werden sollen, kann es günstig sein, für die Herstellung beispielsweise einer einzigen grazil gestalteten Krone eine geringere Preßkraft zu wählen. Auch ist es möglich, den Feststellzeitpunkt von der Zunahme des Verformungswiderstands abhängig zu machen, da dieser stark anwächst, wenn der Formraum vollständig ausgefüllt ist.

Ferner ist es günstig, daß die Ofentemperatur beim Beginn des Füllungszyklus automatisch berücksichtigt wird. Wenn der Ofen nämlich durch das Einsetzen der Muffel einmal - wenn dies etwas länger dauert - stärker abkühlt, beginnt die Plastifizierung und somit die Kolbenbewegung einfach etwas später.

Weitere Einzelheiten, Vorteile und Merkmale der Erfindung sind aus der nachstehenden Beschreibung eines Ausführungsbeispiels anhand der Zeichnung näher erläutert.

Es zeigen:
- Fig. 1: eine schematische Ansicht einer erfindungsgemäßen Muffel samt Formeinsatz im Querschnitt, die für das Ausführen eines erfindungsgemäßen Verfahrens geeignet ist;
- Fig. 2: einen Rohling im Querschnitt;
- Fig. 3: die Muffel gemäß Fig. 1 mit eingesetztem Rohling gemäß Fig. 2 und bereits eingeführtem Kolben;
- Fig. 4: eine schematische Ansicht einer in einen Ofen eingesetzten Muffel, der mit einem druckbeaufschlagten Kolben ausgestattet ist, zur Durchführung des erfindungsgemäßen Verfahrens; und
- Fig. 5: eine schematische Darstellung einer erfindungsgemäßen Steuerung.

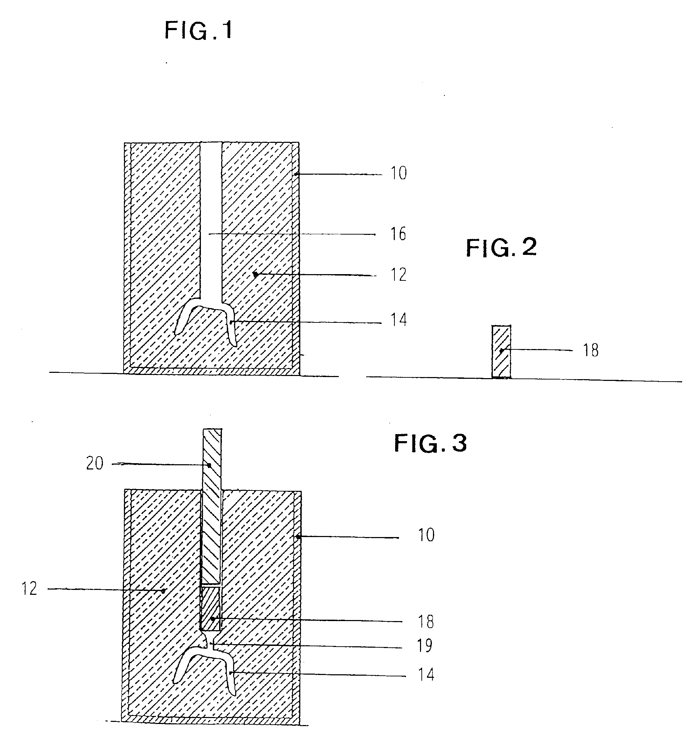

In Fig. 1 ist eine für die Durchführung des erfindungsgemäßen Verfahrens vorbereitete Muffel 10 im Querschnitt dargestellt, in die ein Formeinsatz 12 eingebracht ist. Der Formeinsatz 12 weist eine Ausnehmung auf, die aus einem Formraum 14 und einem Vorpreßraum 16 besteht. Der Formraum 14 ist durch Abformen in an sich bekannter Weise mittels eines Modells des herzustellenden Zahnersatzteils, wie der Krone, erstellt worden. Hierzu besteht der Formeinsatz 12 aus einer Einbettmasse, die zugleich temperaturfest ist.

An den Formraum 14 schließt sich nach oben der Vorpreßraum 16 an, der die Form eines Zylinderrohres hat. Die Wand der Vorpreßraums 16 wird durch den Formeinsatz 12 gebildet und weist eine glatte Oberfläche in der gleichen Weise auf, wie es auch bei dem Formraum 14 vorgesehen ist.

In Fig. 2 ist ein Rohling 18 dargestellt, der die Form eines Vollzylinders hat und in seinem Durchmesser so ausgelegt ist, daß er ohne Schwierigkeiten in den Vorpreßraum 16 gemäß Fig. 1 eingeführt werden kann. Zugleich ist das Volumen des Rohlings 18 so festgelegt, daß es das Volumen des Formraums 14 und damit des herzustellenden Zahnersatzes, mit einer gewissen Sicherheitsmarge übersteigt.

Der Rohling 18 besteht aus einer zahntechnischen Masse, wie aus einer vorgepreßten Dentalkeramik, einer Metall-Legierung oder aus einem zahntechnischen Kunststoff. In einer Abwandlung der Erfindung ist es vorgesehen, mehrere Kronen gleichzeitig herzustellen. Hierzu ist eine Mehrheit von Formräumen 14 zweckmäßigerweise über entsprechende Gußkanäle an den Vorpreßraum 16 angeschlossen, und die Masse des Rohlings 18 ist entsprechend größer gewählt. Bei Verwendung einer Dentalkeramik für den Rohling 18 ist es günstig, wenn dieser im Vakuum gepreßt und anschließend gesintert worden ist, so daß er vollständig porenfrei ist.

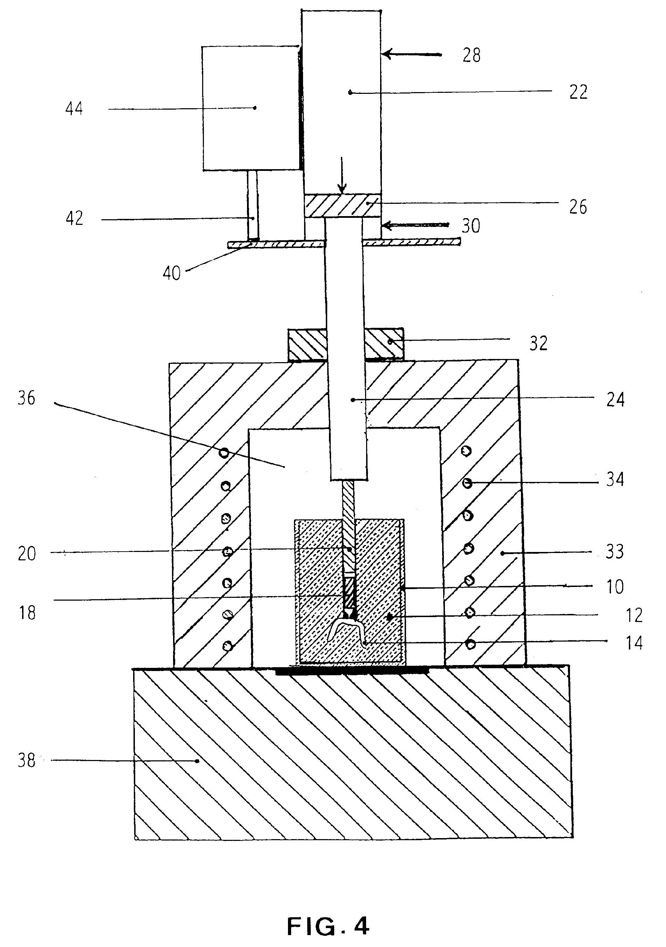

Gemäß Fig. 3 ist der Rohling 18 in den Vorpreßraum 16 eingeführt worden, so daß er auf einem Gußkanal 19 aufliegt, der entweder aus dem Material des Formeinsatzes 12 oder, wie es in Fig. 4 dargestellt ist, als separater Einsatz ausgebildet ist. Nach Einbringen des Rohlings 18 wird ein Kolben 20 in den Vorpreßraum 16 eingeführt, dessen Durchmesser so gewählt ist, daß er im wesentlichen gegen die Wände des Vorpreßraums 16 abdichtet, wobei der Kolben 20 jedoch leichtgängig sein soll. Gewünschtenfalls können an sich bekannte geeignete temperaturbeständige Dichtvorrichtungen vorgesehen sein.

Wie aus Fig. 4 ersichtlich ist, wird der Kolben 20 über einen Druckzylinder angetrieben, durch den er absenkbar ist. In dem dargestellten Ausführungsbeispiel liegt der Kolben 20 über eine Führungsstange 24 an dem Druckzylinder 22 an, so daß die aus Muffel 10, Formeinsatz 12 und Kolben 20 bestehende Einheit leicht aus dem Ofen entnehmbar ist. Die Führungsstange 24 ist an ihrem oberen Ende an einem Antriebskolben 26 befestigt, dessen Durchmesser dem Durchmesser der Druckzylinder 22 entspricht. An den Druckzylinder 22 ist unterhalb und oberhalb des Antriebskolbens 26 je eine Druckleitung 28 bzw. 30 angeschlossen, mit denen sich der Antriebskolben 26 und die Führungsstange 24 senken und anheben läßt. Durch Druckbeaufschlagung der Druckleitung 28 wird dann zudem über den Kolben 20 Druck auf den Rohling 18 ausgeübt, so daß er nach Erweichung in den Formraum 14 eingedrückt werden kann. Da die Führungsstange 24 an dem Kolben 20 lediglich anliegt, ist eine präzise Ausrichtung des Formeinsatzes 12 entbehrlich. Zudem sind etwaige Verkantungsfehler prinzipbedingt ausgeschlossen, denn es werden lediglich vertikal gerichtete Kräfte übertragen.

Die Führungsstange 24 ist in der Deckenwand eines Ofens 33 schiebebeweglich geführt, wobei die Führung über eine Dichtung 32 abgedichtet ist, so daß in einem Innenraum 36 des Ofens, in welchen die Muffel 10 eingesetzt ist, ein Unterdruck erzeugt werden kann. Der Ofen 33 weist eine Heizeinrichtung 34, etwa in Form einer Heizspirale, auf. Der Ofen 33 weist ein Fundament 38 auf. Die aus Deckenwand und den Seitenwänden bestehende Haube läßt sich von dem Fundament 38 abheben bzw. aufklappen und ist an der Trennstelle gegen dieses abgedichtet.

An der Führungsstange 24 ist ferner eine Steuerplatte 40 angebracht, die sich im wesentlichen horizontal erstreckt und eine Auflage für einen federbelasteten Fühlerstab 42 bildet, der beweglich in einem Fühler 44 geführt ist, der seinerseits an dem Druckzylinder 22 angebracht ist. Mit dem Fühler 44 ist damit die Stellung der aus Antriebskolben 26, Führungsstange 24 und Kolben 20 bestehenden Einheit stets genau erfaßbar.

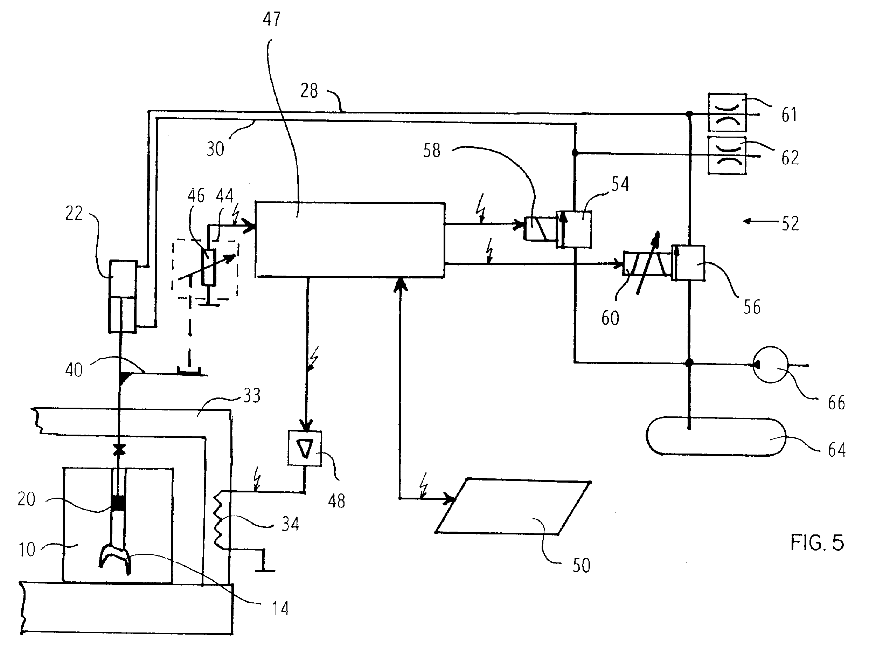

Wie aus Fig. 5 ersichtlich ist, läßt sich mit einer in Fig. 5 dargestellten Steuereinheit 47 das Absenken des Kolbens 20 in der gewünschten Weise steuern. Hierzu ist der Fühler 44 in geeigneter Weise ausgebildet. In der Darstellung gemäß Fig. 5 ist die Ausgestaltung in Form eines Potentiometers 46 vorgesehen, dessen eingestellter Widerstandswert über die Steuerplatte 40 auf die Stellung des Kolbens 20 anspricht. Das Potentiometer 46 weist hierzu eine sehr genau eingehaltene Linearität auf, so daß der erfaßbare Widerstandswert mit guter Genauigkeit der Stellung des Kolbens 20 entspricht.

Es versteht sich, daß anstelle des dargestellten Potentiometers 46 anders geartete Fühler 44 vorgesehen sein können, wie beispielsweise ein Optoencoder, der sogar eine noch etwas verbesserte Linearität erlaubt, jedoch in der Auflösung nur bei entsprechendem Aufwand mit dem Potentiometer 46 vergleichbar ist.

Der Fühler 44 ist mit der Steuereinheit 47 verbunden. Die Steuereinheit 47 ist ferner über einen Verstärker 48, der als Thyristoreinrichtung oder als Relaiseinrichtung ausgebildet sein kann, mit der Heizeinrichtung 34 verbunden, deren anderer Anschluß mit Masse verbunden ist. Damit vermag die Steuereinheit 47 direkt die Heizeinrichtung 34 des Ofens 33 zu steuern.

Ferner ist die Steuereinheit 47 mit einer Ein-/Ausgabe-Konsole 50 verbunden, mit welchem die gewünschten Brennzeiten, die verwendeten formtechnischen Massen, die gewünschte Betriebsart (automatisch oder manuell) und andere Parameter eingebbar sind.

Für die Durchführung des erfindungsgemäßen Verfahrens ist ferner eine Ventilanordnung 52 vorgesehen, die in der dargestellten Ausführungsform ein Hubventil 54 und ein Senkventil 56 aufweist. Jedes Ventil ist hierzu elektrisch mit der Steuereinheit 47 verbunden und weist entsprechende Steuermagnete 58 bzw. 60 auf.

In dem dargestellten Ausführungsbeispiel ist das Senkventil 56 als steuerbares Drosselventil ausgebildet, dessen Stellung regelbar ist, so daß der Druck in dem Druckzylinder 22 entsprechend der Beaufschlagung des Steuermagneten 60, der vorzugsweise zwei Spulen aufweist, einstellbar ist. Damit läßt sich über die Steuereinheit 47 die über den Kolben 20 ausgeübte Preßkraft sowohl in weiten Bereichen als auch mit entsprechend feiner Auflösung steuern. Das Senkventil 56 ist über die Druckleitung 28 mit dem Druckzylinder 22 verbunden, während das Hubventil 54 über die Druckleitung 30 mit dem Druckzylinder 22 verbunden ist. Zusätzlich sind die beiden Druckleitungen 28 und 30 mit je einer Drosselstelle 61 bzw. 62 verbunden, so daß sich eine unaufwendige Drucksteuerung in den Druckleitungen bereitstellen läßt.

Das Hubventil 54 ist so ausgelegt, daß es beim Ansprechen des Steuermagneten 58 eine Druckbeaufschlagung der Druckleitung 30 und damit ein Anheben des Kolbens 20 bewirkt. Dies geschieht zwischen den Brennzyklen, beispielsweise, wenn die Muffel 10 entnommen werden soll.

Die Ventilanordnung 52 ist mit einem Druckbehälter 64 verbunden, der zugleich an eine Pumpe 66 angeschlossen ist, so daß sichergestellt ist, so daß der Eingangsdruck für die Ventilanordnung 52 stets ausreicht, um die gewünschten Steuervorgänge durchführen zu können.

Es versteht sich, daß die Art der pneumatischen Steuerung auf vielfältige andere Weise durchgeführt werden kann. Beispielsweise läßt sich das Hubventil 54 durch ein Zweiwegeventil ersetzen, das einen Druckablaß bewirkt, wenn es nicht anspricht, so daß die Drosselstelle 62 entfallen kann und die Druckleitung 30 an dieser Stelle geschlossen ist. Auch kann die Funktion der Drosselstelle 61 praktisch in das Senkventil 56 integriert werden. Ferner ist es auch möglich, motorisch gesteuerte Ventile für die Ventilanordnung 52 zu verwenden.

Gemäß einer Abwandlung der Erfindung läßt sich das gesamte Pneumatiksystem durch eine elektrische Ausgestaltung des Druckzylinders 22 ersetzen. Hierzu ist der Führungsstab 24 durch eine entsprechende Antriebsspindel für den Kolben 20 ersetzt, wobei als zusätzlicher Druckfühler neben der Steuerplatte 40 als Bewegungsgeber die Stromaufnahme des antreibenden Motors für die Antriebsspindel verwendet werden kann. Die Druckbeaufschlagung des Kolbens 20 kann auch in beliebiger anderer Weise erfolgen.

Gemäß einer alternativen Ausgestaltung der Erfindung ist es vorgesehen, den Fühler 44 als Druckfühler auszubilden. Auch mit dieser Ausgestaltung läßt sich ein Bewegungsparameter des Kolbens 20 erfassen, indem die Zunahme des Drucks kurz vor dem vollständigen Ausfüllen des Formraums 14 mit der Masse festgestellt wird. Diese Druckzunahme entspricht der zuvor beschriebenen Abnahme der Vortriebsgeschwindigkeit, wobei das Ausgangssignal des Druckfühlers 44 ebenfalls der Steuereinheit 47 zugeleitet wird. In dieser alternativen Ausgestaltung, die darüber hinaus auch mit der Stellungsmessung bzw. einer Weg-Zeit-Messung kombiniert werden kann, läßt sich über das Verhältnis von Temperatur und Absolutdruck bzw. Änderung des Gegendrucks ebenfalls die unterschiedliche Ausgestaltung des Formraums bzw. die unterschiedlichen Quantitäten der erforderlichen Masse berücksichtigen.

Es versteht sich, daß sich ferner die Druckabsenkung im Innenraum 36 des Ofens 33 (vgl. Fig. 4) in die automatische Steuerung einbeziehen läßt. Auch kann die gewünschte Nachpreßzeit und/oder Nachbrennzeit sowohl nach der gemessenen Bewegung der Steuerplatte - entsprechend dem Volumen des Formraums 14 - automatisch eingestellt werden oder über die Ein-/Ausgabekonsole vorgewählt werden.

Gemäß einer weiteren alternativen Ausgestaltung ist der Kolben 20 mit einem Kopf ausgestattet, der aufgrund seines Zusatzgewichts Druck auf den Formling auch dann ausübt, wenn die Muffel 10 aus dem Ofen 33 bereits entnommen ist. Zudem wird durch den Kopf eine vergrößerte Stirnfläche zur Anlage an der unteren Stirnfläche der Führungsstange 24 bereitgestellt, so daß die Zentrierung der Muffel 10 in dem Ofen 33 noch unkritischer wird.

## Patentansprüche

1. Verfahren zum Steuern eines Ofens, mit welchem für die Zahntechnik verwendete Massen in einem Formeinsatz gepreßt und gehärtet werden, wobei eine Masse in einen in dem Formeinsatz vorgesehenen Vorpreßraum eingebracht wird, an welchen sich ein Formraum anschließt, und wobei mit einem in den Vorpreßraum eingeführten Kolben die Masse unter Wärmeeinwirkung in den Formraum gepreßt und verformt wird, dadurch **gekennzeichnet**, daß Bewegungsparameter des Kolbens erfaßt werden und bei Feststellung einer das Ausfüllen des Formraums durch die Masse anzeigenden Änderung der Kolbenbewegungsgeschwindigkeit ein Zeitpunkt für das Abschalten des Ofens festgelegt wird.

2. Verfahren nach Anspruch 1, dadurch gekennzeichnet, daß der Kolben mit Druck zum Pressen des Rohlings beaufschlagt wird, bis ein Nachpreßzeitraum abgelaufen ist, der sich nach dem Feststell-Zeitpunkt und insbesondere über den Abschalt-Zeitpunkt hinaus erstreckt.

3. Verfahren nach Anspruch 1 oder 2, dadurch gekennzeichnet, daß bei der Erfassung der Kolbenbewegung auch der Punkt und/oder Zeitpunkt erfaßt wird, an bzw. zu welchem die Verformung eines durch die Masse gebildeten Rohlings beginnt.

4. Verfahren nach einem der vorhergehenden Ansprüche, dadurch gekennzeichnet, daß die Bewegungszeit und/oder Bewegungsstrecke des Kolbens vom Beginn der Verformung bis zum Feststell-Zeitpunkt erfaßt wird und die Nachpreßzeit entsprechend dem hieraus ermittelten Verformungsverhalten der zu einem Formling geformten Masse festgelegt wird.

5. Verfahren nach einem der vorhergehenden Ansprüche, dadurch gekennzeichnet, daß die Kolbengeschwindigkeit während der Verformung des Rohlings erfaßt wird und unter Einstellung des Förderdrucks für den Kolben und/oder der Ofentemperatur auf eine Sollgeschwindigkeit geregelt wird.

6. Verfahren nach einem der vorhergehenden Ansprüche, dadurch gekennzeichnet, daß die Kolbengeschwindigkeit über einen die Bewegung des Kolbens erfassenden analogen Meßwertgeber, wie ein Potentiometer, erfaßt wird und als Regelglied insbesondere ein PI-Regler verwendet wird.

7. Verfahren nach einem der Ansprüche 1 bis 5, dadurch gekennzeichnet, daß für die Erfassung der Kolbenbewegung insbesondere ein Optoencoder vorgesehen und eine Steuereinheit einen Microcontroller aufweist, der auf den Antrieb des Kolbens und die Heizung des Ofens wirkt und in Abhängigkeit von der bei einer bestimmten Antriebskraft des Kolbens erzeugten Kolbengeschwindigkeit im Verhältnis zu der aus der Heizleistung des Ofens berechneten Temperatur des Rohlings den Verformungswiderstand des Rohlings ermittelt und den Kolben entsprechend der gewünschten Voreinstellung mit Druck beaufschlagt.

8. Verfahren nach einem der vorhergehenden Ansprüche, dadurch gekennzeichnet, daß unter Berücksichtigung des aus der Kolbengeschwindigkeit ermittelten Verformungswiderstands das Ausfüllen des Formraums durch den Rohling festgestellt wird, indem ein Schwellenwert des Verformungswiderstands, der insbesondere temperaturabhängig ist, festgelegt wird, oberhalb dessen ein vollständiges Ausfüllen des Formraums durch den Formling angenommen wird.

9. Verfahren nach einem der vorhergehenden Ansprüche, dadurch gekennzeichnet, daß eine den Formeinsatz enthaltende Muffel vorerwärmt wird, insbesondere auf eine Temperatur von 700 - 900°, und dann auf die Plastifizierungstemperatur des Rohlings gebracht wird.

10. Verfahren nach einem der vorhergehenden Ansprüche, dadurch gekennzeichnet, daß der Ofen über eine Regeleinrichtung auf einer Temperatur entsprechend der Erweichungs- oder Plastifizierungstemperatur des Rohlings mindestens für einen vorgegebenen Zeitraum gehalten wird.

11. Ofen für das Verformen und Härten von für die Zahntechnik verwendeten Massen, mit einem Formeinsatz (12), in welchem ein Vorpreßraum (16) und ein sich an diesen anschließender Formraum (14) ausgebildet ist, wobei in den Vorpreßraum die Masse (18) eingebracht ist, mit einem auf die Masse in dem Vorpreßraum wirkenden Kolben (20) und einer Heizeinrichtung (34), dadurch gekennzeichnet, daß ein Fühler (44) für das Erfassen von Bewegungsparametern des Kolbens (20) mit einer Steuereinheit (47) für das Betätigen des Kolbens (20) und für das Abschalten des Ofens (33) verbunden ist.

12. Ofen nach Anspruch 11, dadurch gekennzeichnet, daß der Fühler (44) als Stellungsfühler ausgebildet ist, mit welchem die Stellung des Kolbens (20) erfaßbar ist, und der Kolben durch einen Druckzylinder (22) betätigbar ist.

13. Ofen nach Anspruch 11 oder 12, dadurch gekennzeichnet, daß der Fühler (44) als Druckfühler ausgebildet ist, mit welchem ein beim Füllen des Formraums (14) mit der Masse zunehmender Gegendruck erfaßbar ist.

14. Ofen nach einem der Ansprüche 11 bis 13, dadurch gekennzeichnet, daß die Steuereinheit (47) eine Umschalteinrichtung aufweist, mit welcher die Bewegungsparameter des Kolbens (20) an die verwendete Masse, wie beispielsweise Dentalkeramik, Kunststoff oder eine Metall-Legierung, und/oder an die Quantität der Masse anpaßbar ist.

15. Ofen nach einem der Ansprüche 11 bis 14, dadurch gekennzeichnet, daß die Führungsstange (24) und der Kolben (20) zweiteilig ausgebildet sind und insbesondere je miteinander in Anlage bringbare Stirnflächen aufweisen.

## Claims

1. Method for controlling a kiln, by means of which materials used for dental technology are moulded and hardened in a mould insert, a material being introduced into a premoulding space which is provided in the mould insert and adjoined by a mould space, and the material being pressed into the mould space and deformed under the influence of heat by a plunger which is inserted in the premoulding space, characterised in that movement parameters of the plunger are detected and, upon identifying a change in the plunger movement speed indicating that the mould space is filled with the material, a time is set for turning off the kiln.

2. Method according to claim 1, characterised in that pressure is applied to the plunger for moulding the blank for a post-moulding period which extends from the time when the change in the plunger movement speed is identified and, in particular, beyond the turn-off time.

3. Method according to claim 1 or 2, characterised in that the point and/or time at which the deformation of a blank formed by the material begins is also detected with the plunger movement.

4. Method according to one of the preceding claims, characterised in that the movement time and/or movement path of the plunger is/are detected from the beginning of deformation until the time when the change in the plunger movement speed is identified, and the post-moulding period is established according to the deforming properties, which are determined from this time and/or path, of the material which is formed into an article.

5. Method according to one of the preceding claims, characterised in that the plunger speed is detected while the blank is being deformed and a desired speed is set by adjusting the pressure applied to the plunger and/or the kiln temperature.

6. Method according to one of the preceding claims, characterised in that the plunger speed is detected by an analogue measurement transducer, such as a potentiometer, which detects the movement of the plunger, and a PI controller in particular is used as regulating element.

7. Method according to one of claims 1 to 5, characterised in that an optoencoder in particular is provided to detect the plunger movement, and a control unit comprises a microcontroller which acts on the drive of the plunger and the heating system of the kiln, determines the resistance of the blank to deformation as a function of the plunger speed produced by a certain plunger driving force in relation to the temperature of the blank, which is calculated from the heat output of the kiln, and applies pressure to the plunger according to the desired presetting.

8. Method according to one of the preceding claims, characterised in that, taking account of the resistance to deformation determined from the plunger speed, the point at which the mould space is filled by the blank is determined by establishing a threshold value for the resistance to deformation, which is in particular temperature-dependent, above which it is assumed that the mould space is completely filled by the blank.

9. Method according to one of the preceding claims, characterised in that a muffle containing the mould insert is preheated, in particular to a temperature of 700 - 900°, and then brought to the plasticizing temperature of the blank.

10. Method according to one of the preceding claims, characterised in that the kiln is maintained by a regulating device at a temperature corresponding to the softening or plasticizing temperature of the blank at least for a predetermined period.

11. Kiln for deforming and hardening materials used for dental technology, with a mould insert (12), in which a premoulding space (16) and a mould space (14), which adjoins the latter, are formed, the material (13) being introduced into the premoulding space, with a plunger (20) acting on the material in the premoulding space and a heating device (34), characterised in that a sensor (44) for detecting movement parameters of the plunger (20) is connected to a control unit (47) for actuating the plunger (20) and for turning off the kiln (33).

12. Kiln according to claim 11, characterised in that the sensor (44) is formed as a position sensor for detecting the position of the plunger (20), and the plunger can be actuated by a pressure cylinder (22).

13. Kiln according to claim 11 or 12, characterised in that the sensor (44) is formed as a pressure sensor for detecting a counterpressure increasing as the mould space (14) is filled with the material.

14. Kiln according to one of claims 11 to 13, characterised in that the control unit (47) comprises a switching device for adapting the movement parameters of the plunger (20) to the material being used, such as, for example, a dental ceramic, a plastic or a metal alloy, and/or to the quantity of material.

15. Kiln according to one of claims 11 to 14, characterised in that the guide rod (24) and the plunger (20) are formed as two parts and, in particular, comprise end faces which can be brought into contact with one another.

## Revendications

1. Procédé pour la commande d'un four, par lequel des masses utilisées en technique dentaire sont compressées dans un insert de moule et cuites, une masse étant introduite dans un espace de précompression prévu dans un insert de moule, auquel se raccorde un espace de moulage, et la masse étant compressée et déformée sous l'influence de chaleur dans l'espace de moulage avec un piston introduit dans l'espace de précompression, caractérisé en ce que des paramètres de déplacement du piston sont détectés et un moment d'arrêt du four est établi lors de la détermination d'une modification de la vitesse de déplacement du piston indiquant le remplissage complet de l'espace de moulage par la masse.

2. Procédé selon la revendication 1, caractérisé en ce que le piston est soumis à une pression pour la compression de l'ébauche, jusqu'à ce qu'une période de recompression soit écoulée, qui s'étend après le point de détermination et en particulier au-delà du point d'arrêt.

3. Procédé selon la revendication 1 ou 2, caractérisé en ce que lors de la détection du placement du piston le point et/ou le moment où la déformation d'une ébauche formée par la masse débute sont également détectés.

4. Procédé selon l'une ou l'ensemble des revendications précédentes, caractérisé en ce que le temps de déplacement et/ou la distance de déplacement du piston du début de la déformation au point de détermination sont détectés et le temps de recompression est déterminé en fonction du comportement en déformation de la masse moulée en ébauche déterminé à partir de ceux-ci.

5. Procédé selon l'une ou l'ensemble des revendications précédentes, caractérisé en ce que la vitesse du piston pendant la déformation de l'ébauche est détectée et réglée à une vitesse de consigne par l'ajustement de la pression de transport pour le piston et/ou de la température du four.

6. Procédé selon l'une ou l'ensemble des revendications précédentes, caractérisé en ce que la vitesse du piston est détectée par un capteur de mesure analogique détectant le déplacement du piston, tel qu'un potentiomètre et en ce qu'un régulateur proportionnel et par intégration, en particulier, est utilisé comme organe de réglage.

7. Procédé selon l'une ou l'ensemble des revendications 1 à 5, caractérisé en ce qu'un codeur optique, en particulier, est prévu pour la détection du déplacement du piston et une unité de commande présente un micro-contrôleur, qui agit sur l'entraînement du piston et le chauffage du four et détermine la résistance à la déformation de l'ébauche en fonction de la vitesse de piston produite à une certaine force d'entraînement du piston par rapport à la température de l'ébauche, calculée à partir de la puissance de chauffage du four et applique au piston la pression correspondant au préréglage souhaité.

8. Procédé selon l'une ou l'ensemble des revendications précédentes, caractérisé en ce que compte tenu de la résistance à la déformation déterminée à partir de la vitesse du piston, le remplissage de l'espace de moulage par l'ébauche est déterminé en établissant une valeur de seuil de résistance à la déformation, qui dépend en particulier de la température au-dessus de laquelle un remplissage complet de l'espace de moulage par la pièce moulé est supposé.

9. Procédé selon l'une ou l'ensemble des revendications précédentes, caractérisé en ce qu'un moufle contenant l'insert de moulage est préchauffé, en particulier à une température de 700-900°, et ensuite amené à la température de plastification de l'ébauche.

10. Procédé selon l'une ou l'ensemble des revendications précédentes, caractérisé en ce que le four est maintenu par un dispositif de réglage à une température correspondant à la température de ramollissement ou de plastification de l'ébauche au moins pour une période prédéterminée.

11. Four pour la déformation et la cuisson de masses utilisées en technique dentaire, avec un insert de moulage (12), dans lequel sont formés un espace de précompression (16) et un espace de moulage (14) se raccordant à celui-ci, la masse (18) étant introduite dans l'espace de précompression, avec un piston (20) agissant sur la masse dans l'espace de précompression et un dispositif de chauffage (34), caractérisé en ce qu'un capteur (44) pour la détection de paramètres de déplacement du piston (20) est relié avec une unité de commande (47) pour l'actionnement du piston (20) et pour l'arrêt du four (33).

12. Four selon la revendication 11, caractérisé en ce que le capteur (44) est conçu comme un capteur de position, avec lequel la position du piston (20) peut être détectée, et le piston (20) peut être actionné par un vérin (22).

13. Four selon la revendication 11 ou 12, caractérisé en ce que le capteur (44) est conçu comme un capteur de pression, avec lequel une contre-pression augmentant lors du remplissage de l'espace de moulage (14) avec la masse peut être détectée.

14. Four selon l'une ou l'ensemble des revendications 11 à 13, caractérisé en ce que l'unité de commande (47) présente un dispositif de commutation, avec lequel les paramètres de déplacement du piston (20) peuvent être adaptés à la masse utilisée, par exemple de la céramique dentaire, de la matière plastique ou un alliage métallique, et/ou à la quantité de la masse.

15. Four selon l'une ou l'ensemble des revendications 11 à 14, caractérisé en ce que la tige de guidage (24) et le piston (20) sont conçus en deux parties et présentent en particulier chacun des faces pouvant être amenées en position contiguë l'une de l'autre.
